# EUROPEAN PATENT APPLICATION

(11) **EP 4 020 361 A1**
(43) Date of publication of application: **29.06.2022**
(21) Application number: 21164880.3
(22) Date of filing: 25.03.2021
(51) Int. Cl.: G06Q 30/00

(54) **METHOD FOR CREATING AND HANDLING TECHNICAL SUPPORT REQUESTS**

(30) Priority: 23.12.2020 IT 202000032117
(71) Applicant: Digital Food S.r.l., 66020 San Giovanni Teatino (IT)
(72) Inventor: Ballerini, Antonello, 66020 San Giovanni Teatino CH (IT); Scaglione, Giuseppe, 66020 San Giovanni Teatino CH (IT)
(74) Representative: Perani & Partners S.p.A.

(57) **Abstract**

A method of creating and managing a service request comprises the steps of providing a first channel (1) for sending a service request by a user; providing a dataset (2) comprising a list of possible requests from a user, each item in the list being associated with one or more terms; acquiring a text string (3) representative of a service request by a user; processing said text string (3) by comparing it with the terms associated with each item of the list in the dataset (2) to define a correlation coefficient (4) representative of the semantic proximity between the text string (3) and the terms associated with each item; acquiring a text string (3) representative of a request for assistance by a user; selecting the item of the list in the dataset (2) having the highest correlation coefficient; managing the request corresponding to the selected item.

## Description

The present invention relates to a method of creating and managing a service request. This method can be namely employed to manage and organize the data flow of a service system, i.e. a system in which one or more users request technical support in normally using a product and/or service or in solving problems concerning a given type of product and/or service.

General service systems have been known for a long time. When using an application, a user has several service options. Such options are widely varied and may include consulting a technical manual, submitting requests to experienced users through mailing lists or online forums, or accessing a technical support service provided by the product supplier or a specialized company.

Conventional methods of providing support are generally appropriate for most cases in which the product/service is well defined; however, there is a constantly increasing number of applications that are constantly updated with the introduction of new features and changes in both functionality and user interface. Inconveniently, conventional methods cannot always keep up with new features, and it is often difficult to provide technical support because the most recently introduced features may not be adequately documented.

### SUMMARY OF THE INVENTION

Therefore, the technical purpose of the present invention is to provide a method of creating and managing service requests that can obviate the aforementioned prior art drawbacks.

In particular, the object of the present invention is to provide a method of creating and managing service requests that can easily adapt to the changing needs of the user.

The aforementioned technical purpose and objects are substantially fulfilled by a method of creating and managing service requests that comprises the technical features as disclosed in one or more of the accompanying claims.

In particular, a method of creating and managing a service request according to the present invention comprises the step of providing a first channel for sending a service request by a user.

The method further comprises the step of providing a data set comprising a list of possible user requests. Each item in the list is associated with one or more terms.

Then, a text string representative of a service request by a user is acquired. The text string is processed by comparison with the terms associated with each item of the list in the dataset, to define a correlation coefficient representative of the similarity between the text string and the terms associated with each item.

The item with the highest correlation coefficient is selected from the list of the dataset. Then, the request corresponding to the selected item is managed.

The method of the invention solves the technical problem by providing a highly versatile way to ensure constantly updated technical support to the user.

### LIST OF DRAWINGS

Further features and advantages of the present invention will result more clearly from the illustrative, non-limiting description of a preferred, non-exclusive embodiment of a method of creating and managing service requests, as shown in the annexed drawings, in which:

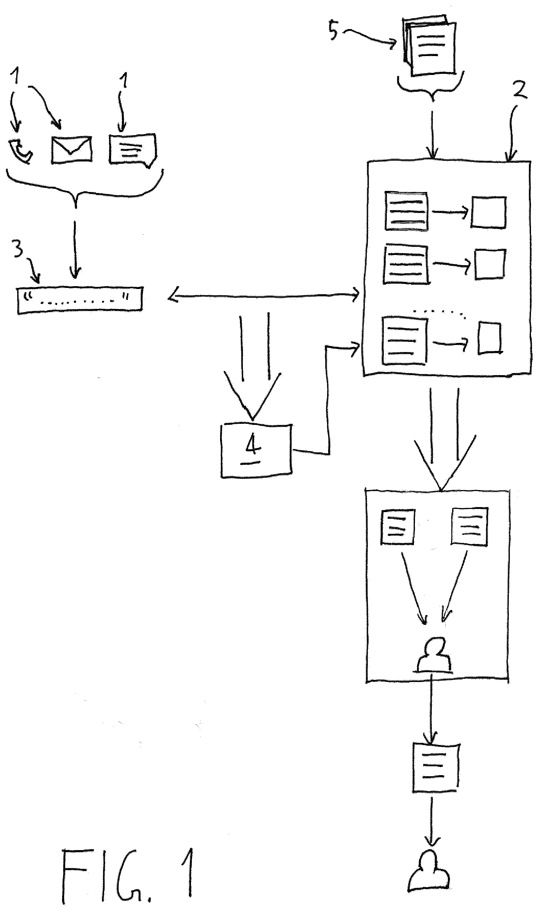

- Figure 1 is a block diagram that schematically shows the operation of a method of creating and managing service requests according to the present invention.

### DETAILED DESCRIPTION

Referring to the accompanying figure, a method of creating and managing a service request according to the present invention will now be described.

In particular, the method includes providing a first channel 1 for sending a service request by a user. This first channel is preferably a text channel, and may be for example an electronic mail and/or instant messaging system. Alternatively, the first channel may be a voice, e.g. telephone channel. In this case, the service request may be acquired by speech recognition.

It should be noted that the method may optionally include simultaneously using multiple channels, which means that the user may send the request through more than one first channel 1.

Further details about service request processing will be provided hereinbelow.

The method also includes providing a dataset 2. This dataset includes a list of possible requests. Each request includes one question and at least one answer. For each application, one or more variants ascribed to the same meaning may be indicated. The answers may also be declined according to the communication channel in use.

Each question and its variant in the dataset is exploded into a set of terms, excluding those that are irrelevant to the creation of the Supervised Machine Learning model. Each group of terms is related to a specific answer and its channel variants (classification) and used for generating the model.

It shall be noted that the step of setting up the data set 2 can be carried out by analyzing a plurality of User Frequently Asked Questions, i.e. FAQs. In addition or alternatively, any type of source material 5 may be used.

If an implementation of the method of the invention is used by several users of different languages, the step of analyzing is carried out by analyzing the same questions in all the languages in which the service is provided.

More in detail, the step of providing and/or the step of updating the dataset 2 comprise the step of analyzing a plurality of questions and answers to prepare the generation of a Machine Learning model based on a spatially-constrained word embedding vector) according to the classification defined by the user. The closeness of words and correlations define their association with one or more topics defined through the question-and-answer pairs.

In operation, the method includes capturing a text string 3 representative of a service request by a user. In particular, this text string 3 can be captured through the first channel 1 as described above.

Then, the text string 3 is processed, in particular by comparison with the terms associated with each item of the list in the dataset 2. Namely, this operation is carried out using a Machine Learning algorithm (Approximate Nearest Neighbors), to perform a search within the model, generated from each item of the list in the dataset 2 that has been previously indexed and pre-loaded in the memory to optimize and speed up its execution. A semantic search algorithm (Approximate Nearest Neighbors) is also strengthened and completed by a Word2vec neural network built based on an ad-hoc dataset and containing a multitude of corpora related to the most frequent customer care topics. Thus, a correlation coefficient 4 representative of the semantic proximity between the text string 3 and each item in the dataset 2 is obtained.

The item with the highest correlation coefficient is then selected from the list of the dataset 2. In particular, the selection may be entirely automated if the correlation coefficient 4 of the first item exceeds a given threshold, for example 90%. Alternatively, a group of items associated with the highest correlation coefficients is presented to an operator, who performs a manual selection by assigning the highest correlation coefficient 4 to the most relevant item.

It shall be noted that the step of processing the text string 3 is at least partially carried out by a neural network. Preferably, the step of processing the text string 3 is entirely carried out by a neural network.

Then, the request corresponding to the selected item is managed. In particular, managing the request may include opening a ticket in a technical support service and/or sending a reply to the user.

More in detail, the step of managing the request may comprise the step of sending an answer pre-processed by a virtual assistant or suggesting answers to an operator who can accept, supplement or reject the suggestion proposed by the virtual assistant.

Preferably, the method comprises the additional step of updating the dataset 2. This is performed using the same method that was used to provide the dataset 2, i.e. by extracting the terms in the text string 3 that has been provided to the user and integrating them into the vector associated with the item selected from the list, if not present.

The present invention also encompasses a service platform that is configured to carry out the above described method. Such platform may be implemented using any method known to the person skilled in the art, but is preferably at least partially implemented in the cloud.

## Claims

1. A method of creating and managing a service request, said method comprising the steps of
- providing a first channel (1) for sending a service request by a user;
- providing a dataset (2) comprising a list of possible requests from a user, each item in the list being associated with one or more terms;
- acquiring a text string (3) representative of a service request by a user;
- processing said text string (3) by comparing it with the terms associated with each item of the list in the dataset (2) to define a correlation coefficient (4) representative of the semantic proximity between the text string (3) and the terms associated with each item;
- selecting the item of the list in the dataset (2) having the highest correlation coefficient;
- managing the request corresponding to the selected item.

2. A method as claimed in the preceding claim, **characterized in that** the step of providing a dataset (2) is carried out by analyzing a plurality of Frequently Asked Questions from users.

3. A method as claimed in the preceding claim, **characterized in that** said step of analyzing is carried out by analyzing the same question in different languages.

4. A method as claimed in any of the preceding claims, **characterized in that** said step of processing the text string (2) is carried out at least partially by means of a neural network.

5. A method as claimed in any preceding claim, **characterized in that** it comprises the additional step of updating said dataset (2).

6. A method as claimed in any of the preceding claims, **characterized in that** the step of providing and/or the step of updating the dataset (2) comprise the step of analyzing a plurality of user messages from any communication channel, e.g. a social network platform.

7. A method as claimed in any of the preceding claims, **characterized in that** the step of managing the request comprises the step of sending a pre-processed reply by a virtual assistant.

8. A method as claimed in the preceding claim, **characterized in that** the step of sending the pre-processed reply is carried out via e-mail and/or through an instant messaging system.

9. A service platform configured to carry out the method as claimed in any of the preceding claims.

10. A platform as claimed in the preceding claim, **characterized in that** it is at least partly implemented in a cloud environment.
